# EUROPEAN PATENT SPECIFICATION

(11) **EP 2 106 593 B1**
(45) Date of publication and mention of the grant of the patent: **06.07.2016**
(21) Application number: 07833608.8
(22) Date of filing: 26.10.2007
(51) Int. Cl.: G06F 17/00, G11B 27/00

(54) **METHOD AND APPARATUS FOR REPRODUCING THE CONTENTS**
VERFAHREN UND VORRICHTUNG ZUM WIEDERGEBEN DER INHALTE
PROCÉDÉ ET APPAREIL DE REPRODUCTION DES CONTENUS

(30) Priority: 24.01.2007 KR 20070007649
(43) Date of publication of application: 07.10.2009
(73) Proprietor: Samsung Electronics Co., Ltd., Suwon-si, Gyeonggi-do, 443-742 (KR)
(72) Inventor: YOON, Young-Sun, Suwon-si Gyeonggi-do 441-742 (KR)
(74) Representative: Appleyard Lees IP LLP
(86) International application number: PCT/KR2007/005299
(87) International publication number: WO 2008/091052

(56) References cited:
- EP-A1- 1 326 173
- EP-A1- 1 401 202
- EP-A2- 0 795 869
- EP-A2- 0 935 251
- KR-A- 20060 112 388
- US-A1- 2005 022 015
- US-A1- 2005 251 481
- US-A1- 2005 271 353
- US-A1- 2007 003 220

## Description

### Technical Field

Apparatuses and methods consistent with the present invention relate to reproduction of contents, and more particularly, to an information storage medium storing contents, and a method and apparatus for reproducing the contents which can control a trick play initiated by a user while reproducing the contents.

### Background Art

In order for a user to use desired contents, there has recently been interest in a business model allowing contents to be used freely only by watching an advertisement, instead of purchasing the contents. Use of the contents is controlled by Digital Rights Management (DRM) and a license to use the contents. However, a user may want to skip the advertisement and to see the main contents and thus a method of controlling this is needed. EP 1326173 discloses a contents distribution system and reproduction apparatus having a structure for reducing the ability of a user to avoid watching advertising media by incorporating a wait mode between the advertising and main contents. The wait mode requires a user input to move to the main contents. The structure is adapted to record in a flash memory when the advertising has been watched. It if has not been watched, starting play in the main contents is not allowed. However, EP 1326173 does not prevent the user from re-watching the main contents without first watching the advertising once the advertising has been watched.

### Disclosure of Invention Technical Solution

The present invention provides a method and apparatus for reproducing the contents which can control a trick play initiated by a user while reproducing the contents, in order to prevent the contents from being reproduced from an arbitrary point in response to the operation of a user using the contents and to reproduce the contents from a designated position according to a content provider's desire.

### Advantageous Effects

Trick plays by a user can be controlled by each section. In particular, when an advertisement is inserted in the middle of the contents data, a user may have to view this advertisement. Therefore, the present invention can be applied to a business model which allows contents to be used freely only by seeing the advertisement. In addition, since a header in a form of a contents file is newly introduced, the present invention can be applied to a real-time streaming service and download service.

### Description of Drawings

The above and other aspects of the present invention will become more apparent by describing in detail exemplary embodiments thereof with reference to the attached drawings , in which:
FIG. 1 is a diagram of contents according to an exemplary embodiment of the present invention;
FIG. 2 is a diagram of contents according to another exemplary embodiment of the present invention;
FIG. 3 is a diagram of trick play support information according to an example of the present invention;
FIG. 4 is a block diagram of a contents reproducing apparatus according to an exemplary embodiment of the present invention;
FIG. 5 is a flowchart illustrating a method of reproducing contents according to an example of the present invention;
FIG. 6 is a flowchart illustrating a method of reproducing contents according to another exemplary embodiment of the present invention;
FIG. 7 is an example of contents header information according to an example of the present invention; and
FIG. 8 illustrates the contents header information of FIG. 7 in more detail, according to an example of the present invention.

### Best Mode

The invention is defined by the appended claims.

### Mode for Invention

Hereinafter, the present invention will be described more fully with reference to the accompanying drawings, in which exemplary embodiments of the invention are shown

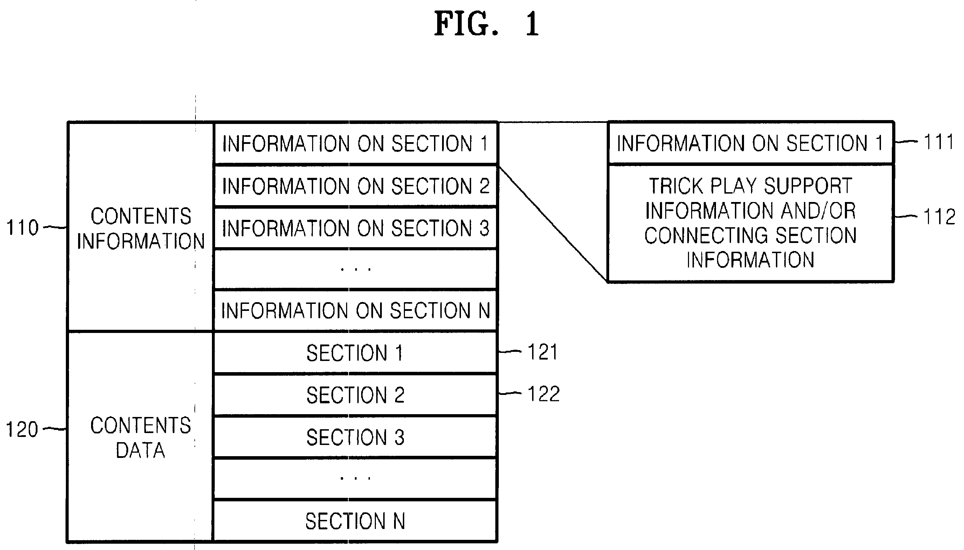

FIG. 1 is a diagram of contents according to an exemplary embodiment of the present invention.

Referring to FIG. 1, contents data 120 including media data is divided into a plurality of sections and contents information 110 including information on each contents data section is recorded. The contents information 110 includes position information 111 for searching the corresponding contents data sections and trick play support information and/or connecting section information 112 for controlling a reproducing order and a reproducing position according to a contents producer's desire.

The position information 111 includes information on a starting position of the corresponding contents data sections and may further include information on an ending position of the corresponding contents data sections. When there is no ending position, an ending position of the section can be ascertained by referring to a starting position of the next section.

Trick play support information indicates whether a trick play is supported in the corresponding contents data section, that is, whether it is possible to perform a trick play order. Information on whether a trick play is supported includes information on whether 'pause', 'rewind', 'fast forward', 'continue play' and/or 'halfway play' of the reproduction is possible within the corresponding contents data section. The trick play is an operation by a user who desires a special playback, instead of a general playback which reproduces the contents from a starting position, for example, 'pause', 'rewind', 'fast forward', 'continue play' and/or 'halfway play'. The 'pause' instruction temporarily stops playback at a position designated by a user, the 'rewind' instruction reproduces the contents in reverse or moves to a prior position from the current playback position, the 'fast forward' instruction quickly reproduces or moves ahead from the current playback position, the 'halfway play' instruction plays the contents from a specific position by using a scroll bar of a reproducing apparatus, and the 'continue play' instruction plays the contents from a position where the previous playback is stopped. For example, as a result of an analysis of trick play support information, if the contents data is set to be reproduced from a starting position of a corresponding section, even if the ' halfway play ' or ' continue play ' instruction from a specific position within the section is inputted, the contents data is reproduced from the starting position of the corresponding section, instead of being reproduced from the specific position.

The connecting section information is information on a contents data section, which is connected to a corresponding contents data section. The connecting section indicates a contents data section which should be reproduced before a corresponding contents data section is reproduced. For example, when a first contents data section 121 is an advertisement image, if a connecting section information field of a second contents data section 122 is set to be connected to the first contents data section 121, skipping of an advertisement by reproducing from the second contents data section 122 can be prevented.

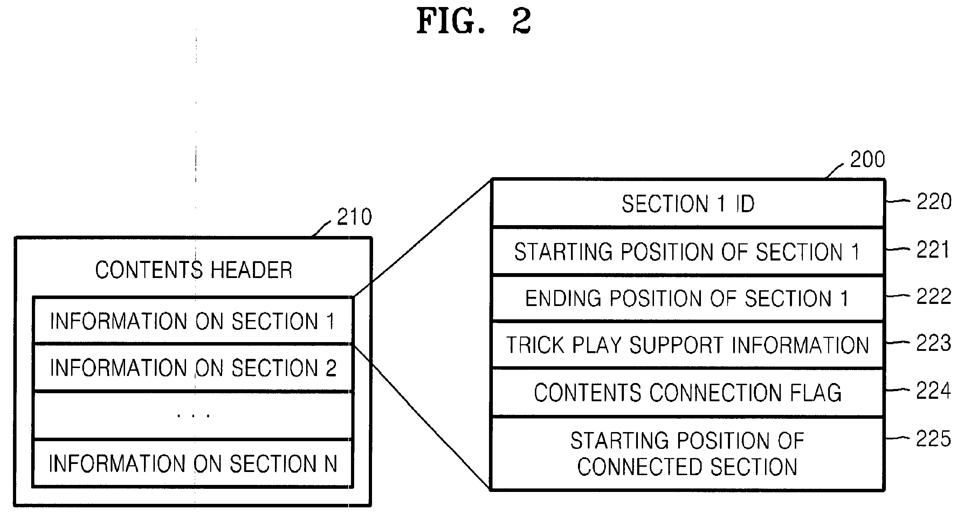

FIG. 2 is a diagram of contents according to another exemplary embodiment of the present invention.

Referring to FIG. 2, contents information is recorded in the form of a contents header 210. That is, information on contents data sections is additionally stored in the contents header 210. In information on each contents data section 200, a starting position 221 and/or an ending position 222 is recorded as position information of a corresponding section and trick play support information 223 is recorded. In addition, a flag 224 indicating whether a contents data section connected to a corresponding section exists , and a starting position of the connected contents data section 225 are recorded as connecting section information. Also, identifiers are allocated to each contents data section and the identifier 220 can be recorded in the information on each contents data section 200.

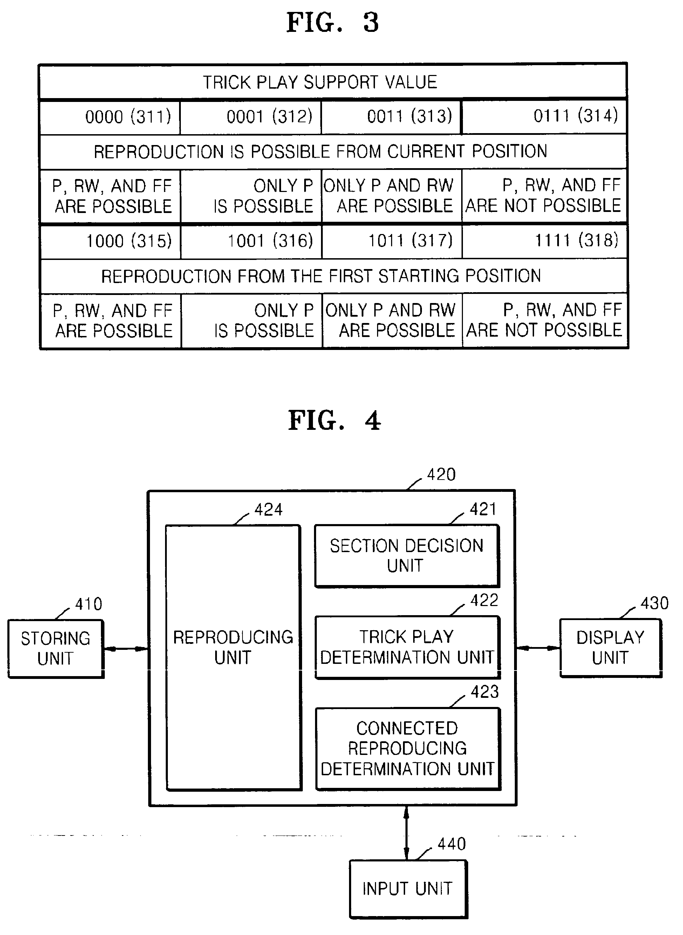

FIG. 3 is a diagram of trick play support information according to an example of the present invention. In FIG. 3, eight (8) trick play values are defined. The trick play values indicate whether the contents should be reproduced from a starting point of the contents data section , or the contents can be reproduced from a current position where reproduction is required , and whether 'pause (P)', 'rewind (REW)', and 'fast forward (FF)' are possible.

Referring to FIG. 3, '0000' (311) indicates that the contents can be reproduced from a current position designated by a user and 'pause (P)', 'rewind (REW)', and 'fast forward (FF)' are possible. '0001'(312) indicates that the contents can be reproduced from a current position designated by a user and only 'pause (P)' is possible. '0011'(313) indicates that the contents can be reproduced from a current position designated by a user and only 'pause (P)' and 'rewind (REW)' are possible. '0111'(314) indicates that the contents can be reproduced from a current position designated by a user and 'pause (P)', 'rewind (REW)', and 'fast forward (FF)' are not possible. '1000'(315) indicates that the contents cannot be reproduced from a current position designated by a user and must be reproduced from a starting position of the corresponding section, and 'pause (P)', 'rewind (REW)', and 'fast forward (FF)' are possible. '1001'(316) indicates that the contents must be reproduced from a starting position of the corresponding section and only 'pause (P)' is possible. '1011'(317) indicates that the contents must be reproduced from a starting position of the corresponding section and only 'pause (P)' and 'rewind (REW)' are possible. '1111'(318) indicates that the contents must be reproduced from a starting position of the corresponding section and 'pause (P)', 'rewind (REW)', and 'fast forward (FF)'are not possible.

FIG. 4 is a block diagram of a contents reproducing apparatus according to an exemplary embodiment of the present invention.

Referring to FIG. 4, the contents reproducing apparatus includes a storing unit 410, a control unit 420, a display unit 430, and an input unit 440. The storing unit 410 stores contents information including contents data formed of a plurality of sections, position information on each contents data section, information on whether trick play is supported and/or information on connecting sections. The control unit 420 reads out and reproduces the contents stored in the storing unit 410 and controls an operation by a user for each section. The display unit 430 outputs reproduced contents and a user interface. The input unit 440 is used by a user to input instructions.

The control unit 420 includes a section decision unit 421, a trick play determination unit 422, and a reproducing unit 424. The section decision unit 421 refers to the position information on each contents data section and determines a contents data section corresponding to a position where a reproduction or a trick play is required by user input. The trick play determination unit 422 refers to information on whether a trick play is supported in the determined contents data section and determines whether to perform an inputted trick play instruction. The reproducing unit 424 reproduces the contents and performs the inputted trick play instruction under the control of the trick play determination unit 422.

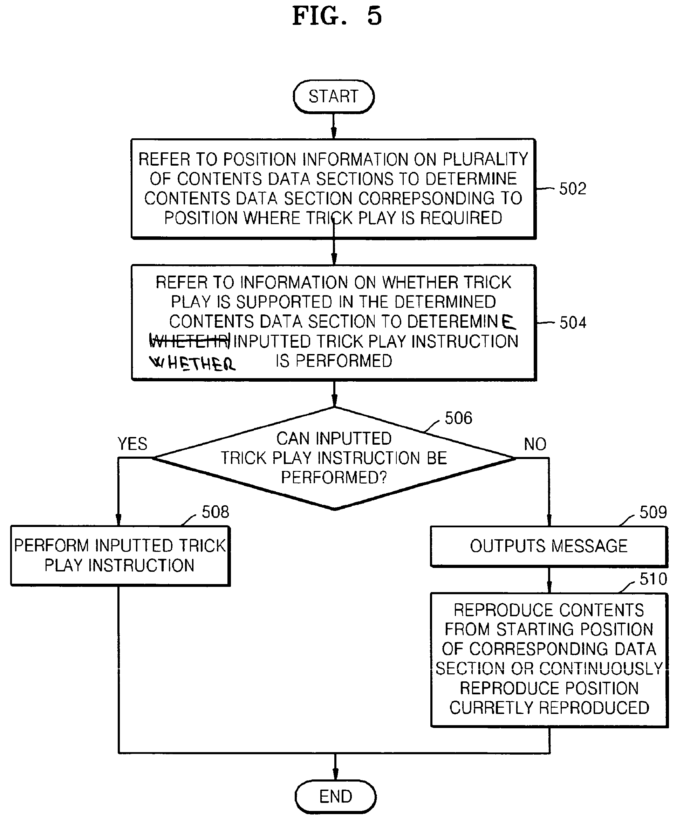

In addition, the control unit 420 may further include a connected reproducing determination unit 423 which control s the reproducing unit 424 such that connected contents data section is reproduced before the determined contents data section is reproduced. In this case, the control unit 420 refers to information on contents data sections connected to the determined contents data section , and determines whether the connected contents data sections exist s. The connected reproducing determination unit 423 repeatedly checks to determine whether another contents data section is connected to the connected contents data section. When it is determined that another contents data section is connected to the connected contents data section , the connected reproducing determination unit 423 controls the reproducing unit 424 to reproduce the other contents data section before the connected contents data section is reproduced. That is, all sections connected to the corresponding sections are reproduced before the section designated by a user. The control unit 420 will be described more fully with reference to FIGS. 5 through 8.

FIG. 5 is a flowchart illustrating a method of reproducing contents according to an example of the present invention.

Referring to FIG. 5, when a user inputs a trick play instruction through the input unit 440 or a 'play' button is pressed and a trick play instruction instructing to 'continue play' from the position at which playing was stopped is inputted, the section decision unit 421 refers to position information on a plurality of contents data sections and determines a contents data section corresponding to a position where a trick play is required in operation 502. It can be determined by calculating a value of the position where a trick play is required and comparing the value with a starting position of each section. Next, the trick play determination unit 422 refers to information on whether a trick play is supported in the determined contents data section and determines whether to perform the inputted trick play instruction in operation 504.

If it is determined that the inputted trick play instruction can be performed in operation 506, the reproducing unit 424 is controlled to perform the inputted trick play instruction in operation 508. When it is determined that the inputted trick play instruction cannot be performed in operation 506, a message showing that the inputted instruction cannot be performed is outputted to the display unit 430 in operation 509. Then, the contents are reproduced from a starting position of the corresponding contents data section or a position currently being reproduced is continuously reproduced in operation 510. For example, when 'halfway play' or 'continue play' is inputted in a section where these instructions are not supported, a user can reproduce the contents from a starting position of the contents data section corresponding to a position designated by a user. When 'pause' or 'fast forward' is inputted in a section where these instructions are not supported, the contents can be reproduced from a position where it was reproducing just before inputting an instruction.

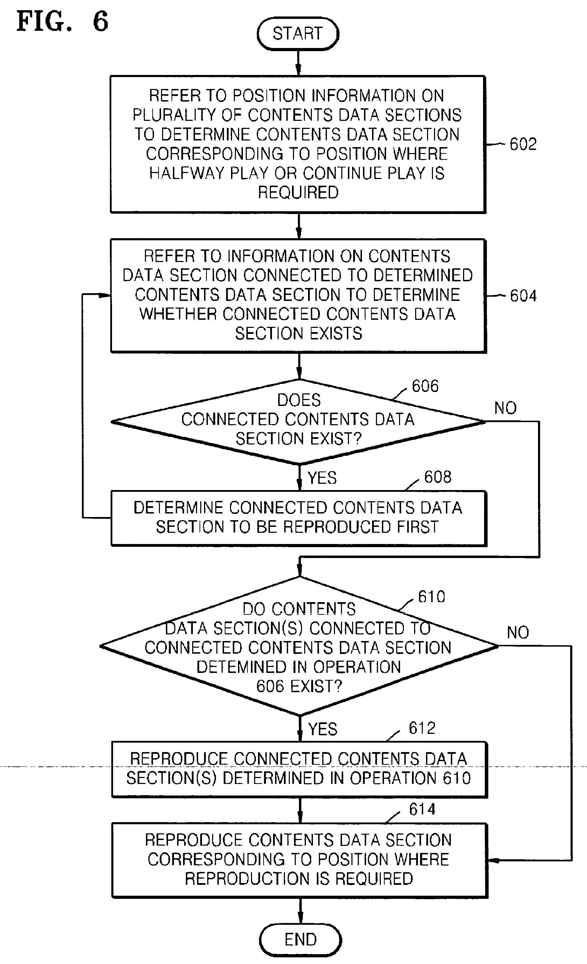

FIG. 6 is a flowchart illustrating a method of reproducing contents according to another exemplary embodiment of the present invention.

Referring to FIG. 6, when a user inputs a trick play instruction such as 'halfway play' through the input unit 440 or a 'play' button is pressed and a trick play instruction instructing to 'continue play' from the position at which playing was previously stopped is inputted, the section decision unit 421 refers to position information on a plurality of contents data sections and determines a contents data section corresponding to a position where a 'halfway play' or 'continue play' is required in operation 602. Next, the connected reproducing determination unit 423 refers to information on contents data sections connected to the determined contents data section and determines whether a connected contents data section exists in operation 604. If it is determined that there exists a contents data section connected to the section corresponding to a position where a user desires to reproduce in operation 606, the connected contents data section is determined as a contents data section to be firstly reproduced in operation 608 , and it is determined whether there exists another section connected to the section corresponding to the position where the user desires to reproduce in operation 604.

Operations 604 through 608 are repeatedly performed until a connected section cannot be found anymore. For example, when the value of the contents connection flag 224 is '1', it indicates that a connected section exists. When the value of the contents connection flag 224 is '0', a connected section does not exist. In this case, identification of the connected section is repeatedly performed until the contents data section having the value of '0' is found.

If at least one contents data section connected to the contents data section determined in operation 606 is found in operation 610, the connected reproducing determination unit 423 controls the reproducing unit 424 to reproduce this at least one section first in operation 612. The contents are reproduced in the order from the section found last to the section found first. In this case, 'halfway play' or 'continue play' is not possible and a message indicating that the connected section(s) is reproduced firstly may be provided to a user. In operation 614, if a contents data section connected to the contents data section determined in operation 606 is not found in operation 610 , the connected reproducing determination unit 423 controls the reproducing unit 424 to reproduce a contents data section corresponding to a position where a user requires to reproduce by the inputted trick play instruction in operation 614. Here, in the case that contents information includes trick play support information, it should be determined whether the contents can be reproduced from a position where a user requires, before 'halfway play' or 'continue play' is performed. When the contents is set to be reproduced from a starting point of the contents data section corresponding to a position where a user requires, as a result of the determination, the contents is reproduced from a starting point of the corresponding section regardless of a user's requirement.

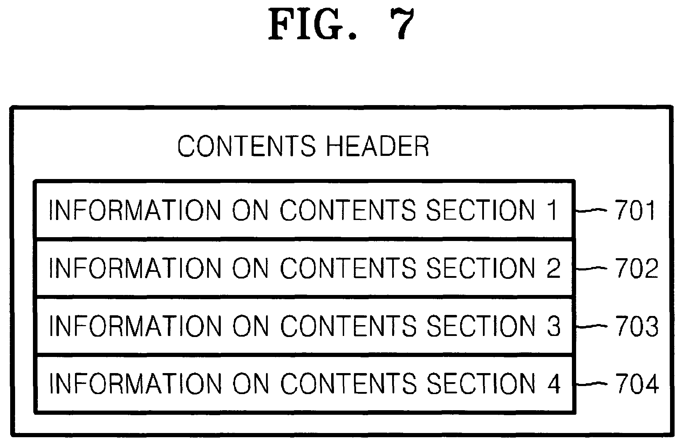

FIG. 7 is an example of contents header information according to an example of the present invention. Referring to FIG. 7, the contents data is divided into four (4) sections and information on each contents data section 701 through 704 is recorded on the contents header.

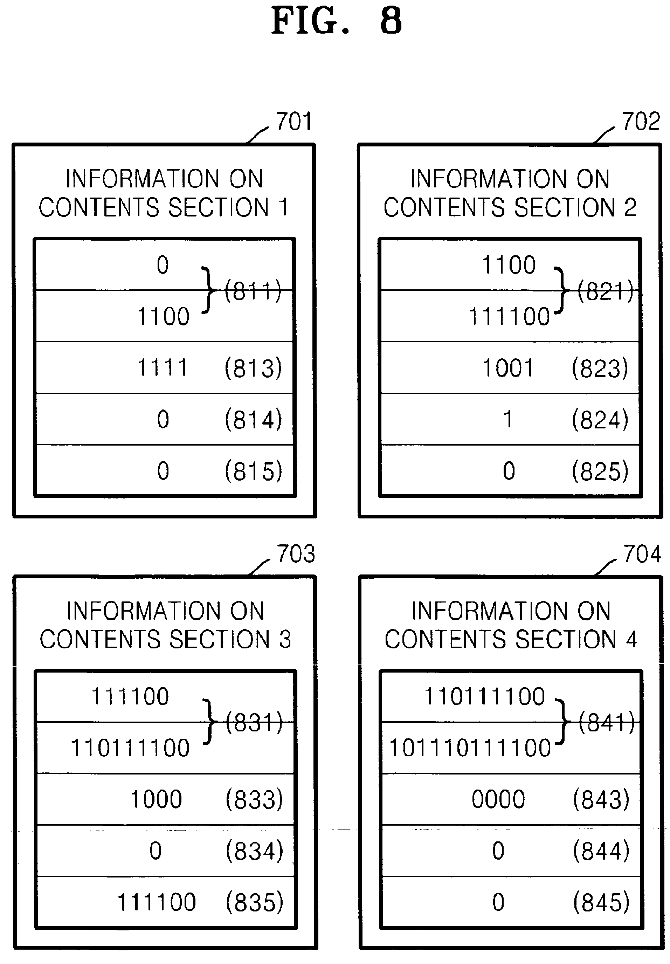

FIG. 8 illustrates the contents header information of FIG. 7 in more detail.

Referring to FIG. 8, the positions of the contents data sections 1 through 4 in the contents data are 0 ∼ 1100 (811), 1100 ∼ 111100 (821), 111100 ∼ 110111100 (831), and 110111100 ∼ 101110111100 (841), respectively, and the trick play support value of each section is 1111 (813), 1001 (823), 1000 (833), and 0000 (843), respectively. In the information on contents data sections 2 (702), when the value of contents connection flag (824) is '1', it indicates that a connected section exists. When the values of the contents connection flags (814, 834 and 844) are '0', they indicate that a connected section does not exist. When the value of the contents connection flag is '0', starting position fields (815 and 845) of the connected sections can be filled with '0'. However, in information on contents data section 3 (703), when the value of the contents connection flag is '0' and the contents data section has to be reproduced from a starting point, a starting position '111100' of the corresponding section 3 can be recorded again on a starting position field (835) of the connected section so that a reproducing position can be easily determined. In FIG. 8, the section where the connected contents data section exists is only a contents data section 2 having a contents connection flag (824) of '1'. The contents data section 2 is connected to a contents data section 1 having a starting point of '0' (825).

When a user reproduces the contents from the beginning, each section is sequentially reproduced as in a prior art. When a user reproduces the contents for approximately 10 minutes and presses the 'pause' button, a reproducing apparatus calculates a value of a position designated by a user, that is, a value of the position where a 'pause' instruction is inputted, and determines which contents data section includes the position. Assuming that the designated position corresponds to the contents data section 2, a reproducing apparatus searches for information on the contents data section 2 (702) stored in the header and identifies that a value of the trick play support information ( 823) is '1001'. Therefore, referring to an example of FIG. 3, the contents data sections 2 is a section where a 'pause' is possible and thus 'pause' is performed.

It is assumed that a user presses the 'stop' button after 30 minutes to complete the reproduction of the contents and reproduces the contents again the next day. Here, if a user wants to skip a section that is already viewed and 'continue play' the contents from the previous stop point by dragging the scroll bar of the contents reproducing apparatus to a 10 minute position, the apparatus calculates which section includes the position corresponding to the 10 minute position and determines that the position is included in the contents data section 2. The information on the contents data section 2 (702) is connected to the contents data section 1 having the starting position of '0' (825), and is the section where the contents must be reproduced from the beginning. Therefore, a message indicating that 'continue play' is not possible is outputted , and the contents data section 2 is reproduced from the beginning after the contents data section 1 is reproduced.

When a user wants to reproduce the contents two (2) days later, and a position where a user designates as 'halfway play' is included in the contents data section 3, information on the contents data section 3 (703) is searched. As a result of the searching, since the trick play support information (833) of the contents data section 3 is '1000', reproduction from the current position designated by a user is not possible, and instead, the contents should be reproduced from the starting point of the corresponding section and 'pause ', 'rewind' and 'fast forward' are supported. In addition, the contents connection flag (834) is '0' and thus a connected section does not exist. Therefore, contents is reproduced from the starting point of the contents data section 3 '111100'. While reproducing in this section, 'pause', 'rewind', and 'fast forward' are possible.

When a position where a user wants to start reproducing corresponds to the contents data section 4, the contents connection flag (844) is '0' and thus a connected section does not exist, and all trick play instructions are supported. Accordingly, the contents can be reproduced from a position where a user requires and trick plays such as 'pause', "rewind, and "fast forward" can be freely used while viewing this section.

The method of the invention can be embodied as computer readable codes on a computer readable recording medium.

## Claims

1. A method of reproducing contents wherein the contents comprises:
contents data (120), comprising a plurality of contents data sections (121, 122), wherein the plurality of contents data sections are arranged to be sequentially reproduced ; and
contents information (110), comprising a plurality of contents information sections (701, 702, 702, 704), where each contents information section (701, 702, 702, 704) contains information on the contents of a corresponding contents data section (121, 122), each contents information section (701, 702, 702, 704) comprising:
position information (111), being information on the position of the corresponding contents data section; and
information (112) on whether a trick play is supported;
the method comprises:
referring to the position information (111) on the contents data sections to determine a contents data section corresponding to a position where a trick play is required;
referring to information (112) on whether the trick play is supported in the determined contents data section to determine whether to play the trick play; and
reproducing the contents according to the determining whether to play the trick play;
**characterized in that**:
each contents information section (701, 702, 702, 704) further comprises connecting section information (112), wherein the connecting section information (112) is information indicating that a sequentially prior contents data section (121) should be reproduced before the determined contents data section (122) that corresponds to the contents information section containing said connecting section information: and
if the trick play that has been requested is continue play or halfway play, determining whether said determined contents data section (122) is connected to a sequentially prior contents data section (121) by referring to the connecting section data of the determined contents data section; and
if it is determined that the determined contents data section (122) is connected to a sequentially prior contents data section (121), reproducing the sequentially prior contents data section (121) before reproducing the determined contents data section.

2. The method of Claim 1, wherein, before reproducing the sequentially prior contents data section (121) the method comprises the step of:
determining whether said sequentially prior contents data section (121) is itself connected to a sequentially prior contents data section; and
repeating the step until a contents data section is found that is not linked to a sequentially prior contents data section, wherein the contents is reproduced from said not linked contents data section.

3. The method of Claim 1, wherein the reproducing of the sequentially prior contents data section (121) comprises outputting a message indicating that the continue play or the halfway play is not possible from the position where the trick play is required.

4. The method of Claim 1, further comprising:
if the trick play is continue play or halfway play and the contents data section (122) is not connected to a sequentially prior contents data section (121), determining whether said contents data section (122) supports trick play and, if it does, reproducing the contents data section (122) from a position the user requires, or if it is determined that trick play is not supported, starting reproduction at the beginning of said contents data section (122).

5. A computer readable recording medium having embodied thereon a computer program for executing the method of Claim 1.

6. An apparatus for reproducing contents wherein the contents comprises:
contents data (120), comprising a plurality of contents data sections (121, 122), wherein the plurality of contents data sections are arranged to be sequentially reproduced ; and
contents information (110), comprising a plurality of contents information sections (701, 702, 702, 704), where each contents information section (701, 702, 702, 704) contains information on the contents of a corresponding contents data section (121, 122), each contents information section (701, 702, 702, 704) comprising:
position information (111), being information on the position of the corresponding contents data section; and
information (112) on whether a trick play is supported;
the apparatus comprising:
a storing unit which is adapted to store the contents data sections and contents information sections
a section decision unit which is adapted to refer to the position information, and determine a contents data section corresponding to a position where the trick play is required;
a trick play determination unit which is adapted to refer to the information on whether the trick play is supported in the determined contents data section, and determines whether to perform the trick play; and
a reproducing unit which is adapted to reproduce the contents, and performs the trick play under a control of the trick play determination unit;
**characterized in that**:
each contents information section (701, 702, 702, 704) further comprises connecting section information (112), wherein the connecting section information (112) is information indicating that a sequentially prior contents data section (121) should be reproduced before the contents data section (122) that corresponds to the contents information section containing said connecting section information: and
the apparatus further comprises a connected reproducing determination unit which is adapted to determine whether a contents data section (122) is connected to a sequentially prior contents data section (121) by referring to the connecting section information,
wherein if the trick play is continue play or halfway play, and it is determined that a sequentially prior contents data section (121) is connected, the connected reproducing determination unit is adapted to control the reproducing unit such that the sequentially prior contents data section (121) is reproduced before the determined contents data section (122) is reproduced.

## Patentansprüche

1. Verfahren zum Wiedergeben von Inhalten, wobei die Inhalte Folgendes umfassen:
Inhaltsdaten (120), die mehrere Inhaltsdatenabschnitte (121, 122) umfassen, wobei die mehreren Inhaltsdatenabschnitte ausgelegt sind, sequenziell wiedergegeben zu werden; und
Inhaltsinformationen (110), die mehrere Inhaltsinformationsabschnitte (701, 702, 702, 704) umfassen, wobei jeder Inhaltsinformationsabschnitt (701, 702, 702, 704) Informationen über die Inhalte eines entsprechenden Inhaltsdatenabschnitts (121, 122) enthält, wobei jeder Inhaltsinformationsabschnitt (701, 702, 702, 704) Folgendes umfasst:
Positionsinformationen (111), die Informationen über die Position des entsprechenden Inhaltsdatenabschnitts sind; und
Informationen (112) darüber, ob eine Trick-Wiedergabe unterstützt wird;
wobei das Verfahren Folgendes umfasst:
Bezugnehmen auf die Positionsinformationen (111) über die Inhaltsdatenabschnitte, um einen Inhaltsdatenabschnitt zu bestimmen, der einer Position entspricht, wo eine Trick-Wiedergabe verlangt wird;
Bezugnehmen auf Informationen (112) darüber, ob die Trick-Wiedergabe in dem bestimmten Inhaltsdatenabschnitt unterstützt wird, um zu bestimmen, ob die Trick-Wiedergabe abzuspielen ist; und
Wiedergeben der Inhalte gemäß der Bestimmung, ob die Trick-Wiedergabe abzuspielen ist;
**dadurch gekennzeichnet, dass**:
jeder Inhaltsinformationsabschnitt (701, 702, 702, 704) ferner Verbindungsabschnittsinformationen (112) umfasst, wobei die Verbindungsabschnittsinformationen (112) Informationen sind, die angeben, dass ein sequenziell vorheriger Inhaltsdatenabschnitt (121) vor dem bestimmten Inhaltsdatenabschnitt (122), der dem Inhaltsinformationsabschnitt entspricht, der die Verbindungsabschnittsinformationen enthält, wiedergegeben werden sollte; und
dann, wenn die Trick-Wiedergabe, die angefordert wurde, ein durchgängiges Abspielen oder ein teilweises Abspielen ist, Bestimmen, ob der bestimmte Inhaltsdatenabschnitt (122) mit einem sequenziell vorherigen Inhaltsdatenabschnitt (121) verbunden ist, durch Bezugnehmen auf die Verbindungsabschnittsdaten des bestimmten Inhaltsdatenabschnitts; und
dann, wenn bestimmt wird, dass der bestimmte Inhaltsdatenabschnitt (122) mit einem sequenziell vorherigen Inhaltsdatenabschnitt (121) verbunden ist, Wiedergeben des sequenziell vorherigen Inhaltsdatenabschnitts (121) vor dem Wiedergeben des bestimmten Inhaltsdatenabschnitts.

2. Verfahren nach Anspruch 1, wobei vor dem Wiedergeben des sequenziell vorherigen Inhaltsdatenabschnitts (121) das Verfahren den folgenden Schritt umfasst:
Bestimmen, ob der sequenziell vorherige Inhaltsdatenabschnitt (121) selbst mit einem sequenziell vorherigen Inhaltsdatenabschnitt verbunden ist; und
Wiederholen des Schritts, bis ein Inhaltsdatenabschnitt gefunden wird, der nicht mit einem sequenziell vorherigen Inhaltsdatenabschnitt verbunden ist, wobei die Inhalte von dem nicht verbundenen Inhaltsdatenabschnitt wiedergegeben werden.

3. Verfahren nach Anspruch 1, wobei das Wiedergeben des sequenziell vorherigen Inhaltsdatenabschnitts (121) umfasst, eine Nachricht auszugeben, die angibt, dass das durchgängige Abspielen oder das teilweise Abspielen von der Position, wo die Trick-Wiedergabe verlangt wird, nicht möglich ist.

4. Verfahren nach Anspruch 1, das ferner Folgendes umfasst:
dann, wenn die Trick-Wiedergabe durchgängiges Abspielen oder teilweises Abspielen ist und der Inhaltsdatenabschnitt (122) nicht mit einem sequenziell vorherigen Inhaltsdatenabschnitt (121) verbunden ist, Bestimmen, ob der Inhaltsdatenabschnitt (122) Trick-Wiedergabe unterstützt, und wenn ja, Wiedergeben des Inhaltsdatenabschnitts (122) von einer Position, die der Anwender verlangt, oder dann, wenn bestimmt wird, dass die Trick-Wiedergabe nicht unterstützt wird, Beginnen der Wiedergabe am Beginn des Inhaltdatenabschnitts (122).

5. Computerlesbares Aufzeichnungsmedium mit darauf enthaltenem Computerprogramm zum Ausführen des Verfahrens nach Anspruch 1.

6. Vorrichtung zum Wiedergeben von Inhalten, wobei die Inhalte Folgendes umfassen:
Inhaltsdaten (120), die mehrere Inhaltsdatenabschnitte (121, 122) umfassen, wobei die mehreren Inhaltsdatenabschnitte ausgelegt sind, sequenziell wiedergegeben zu werden; und
Inhaltsinformationen (110), die mehrere Inhaltsinformationsabschnitte (701, 702, 702, 704) umfassen, wobei jeder Inhaltsinformationsabschnitt (701, 702, 702, 704) Informationen über die Inhalte eines entsprechenden Inhaltsdatenabschnitts (121, 122) umfasst, wobei jeder Inhaltsinformationsabschnitt (701, 702, 702, 704) Folgendes umfasst:
Positionsinformationen (111), die Informationen über die Position des entsprechenden Inhaltsdatenabschnitts sind; und
Informationen (112) darüber, ob eine Trick-Wiedergabe unterstützt wird;
wobei die Vorrichtung Folgendes umfasst:
eine Speichereinheit, die ausgelegt ist, die Inhaltsdatenabschnitte und die Inhaltsinformationsabschnitte zu speichern;
eine Abschnittsentscheidungseinheit, die ausgelegt ist, sich auf die Positionsinformationen zu beziehen und einen Inhaltsdatenabschnitt zu bestimmen, der einer Position entspricht, wo eine Trick-Wiedergabe verlangt wird;
eine Trick-Wiedergabebestimmungseinheit, die ausgelegt ist, sich auf die Informationen darüber, ob die Trick-Wiedergabe in dem bestimmten Inhaltsdatenabschnitt unterstützt wird, zu beziehen, und bestimmt, ob die Trick-Wiedergabe ausgeführt wird; und
eine Wiedergabeeinheit, die ausgelegt ist, die Inhalte wiederzugeben, und die Trick-Wiedergabe unter einer Steuerung der Trick-Wiedergabebestimmungseinheit ausführt;
**dadurch gekennzeichnet, dass**:
jeder Inhaltsinformationsabschnitt (701, 702, 702, 704) ferner Verbindungsabschnittsinformationen (112) umfasst, wobei die Verbindungsabschnittsinformationen (112) Informationen sind, die angeben, dass ein sequenziell vorheriger Inhaltsdatenabschnitt (121) vor dem Inhaltsdatenabschnitt (122) wiedergegeben werden sollte, der dem Inhaltsinformationsabschnitt entspricht, der die Verbindungsabschnittsinformationen enthält; und
die Vorrichtung ferner eine Verbindungswiedergabebestimmungseinheit umfasst, die ausgelegt ist, durch Bezugnahme auf die Verbindungsabschnittsinformationen zu bestimmen, ob ein Inhaltsdatenabschnitt (122) mit einem sequenziell vorherigen Inhaltsdatenabschnitt (121) verbunden ist,
wobei dann, wenn die Trick-Wiedergabe ein durchgängiges Abspielen oder ein teilweises Abspielen ist und bestimmt wird, dass ein sequenziell vorheriger Inhaltsdatenabschnitt (121) verbunden ist, die Verbindungswiedergabebestimmungseinheit ausgelegt ist, die Wiedergabeeinheit derart zu steuern, dass der sequenziell vorherige Inhaltsdatenabschnitt (121) wiedergegeben wird, bevor der bestimmte Inhaltsdatenabschnitt (122) wiedergegeben wird.

## Revendications

1. Procédé pour reproduire des contenus, lesquels contenus comprennent :
- des données de contenus (120) comprenant plusieurs sections de données de contenus (121, 122), lesdites plusieurs sections de données de contenus étant conçues pour être reproduites séquentiellement ; et
- des informations de contenus (110) comprenant plusieurs sections d'informations de contenus (701, 702, 702, 704), chaque section d'informations de contenus (701, 702, 702, 704) contenant des informations sur les contenus d'une section de données de contenus (121, 122) correspondante, et chaque section d'informations de contenus (701, 702, 702, 704) comprenant :
- des informations de position (111) qui sont des informations sur la position de la section de données de contenus correspondante ; et
- des informations (112) indiquant si une lecture spéciale est prise en charge ;
lequel procédé consiste à :
- se référer aux informations de position (111) sur les sections de données de contenus afin de déterminer une section de données de contenus correspondant à une position où une lecture spéciale est requise ;
- se référer aux informations (112) indiquant si une lecture spéciale est prise en charge dans la section de données de contenus déterminée afin de déterminer si l'on doit effectuer la lecture spéciale ; et
- reproduire les contenus en fonction de la détermination concernant l'exécution de la lecture spéciale ;
**caractérisé en ce que** :
- chaque section d'informations de contenu (701, 702, 702, 704) comprend en outre des informations de section de connexion (112), lesquelles informations de section de connexion (112) sont des informations indiquant qu'une section de données de contenus séquentiellement antécédente (121) devrait être reproduite avant la section de données de contenus déterminée (122) qui correspond à la section d'informations de contenus contenant les informations de section de connexion ; et
- si la lecture spéciale qui a été demandée est une lecture continue ou une lecture médiane, déterminer si la section de données de contenus déterminée (122) est connectée à une section de données de contenus séquentiellement antécédente (121) en se référant aux données de section de connexion de la section de données de contenus déterminée ; et
- s'il est déterminé que la section de données de contenus déterminée (122) est connectée à une section de données de contenus séquentiellement antécédente (121), reproduire la section de données de contenus séquentiellement antécédente (121) avant de reproduire la section de données de contenus déterminée.

2. Procédé selon la revendication 1, dans lequel, avant de reproduire la section de données de contenus séquentiellement antécédente (121), le procédé comprend les étapes suivantes :
- déterminer si la section de données de contenus séquentiellement antécédente (121) est elle-même connectée à une section de données de contenus séquentiellement antécédente ; et
- répéter l'étape jusqu'à trouver une section de données de contenus qui n'est pas connectée à une section de données de contenus séquentiellement antécédente, les contenus étant reproduits depuis la section de données de contenus non connectée.

3. Procédé selon la revendication 1, dans lequel la reproduction de la section de données de contenus séquentiellement antécédente (121) consiste à émettre un message indiquant que la lecture continue ou la lecture médiane n'est pas possible depuis la position où la lecture spéciale est demandée.

4. Procédé selon la revendication 1, consistant en outre à : si la lecture spéciale est une lecture continue ou une lecture médiane et que la section de données de contenus (122) n'est pas connectée à une section de données de contenus séquentiellement antécédente (121), déterminer si la section de données de contenus (122) prend en charge la lecture spéciale et, si tel est le cas, reproduire la section de données de contenus (122) depuis une position demandée par l'utilisateur ou, s'il est déterminé que la section de données de contenus (122) ne prend pas en charge la lecture spéciale, commencer la reproduction au début de la section de données de contenus (122).

5. Support d'enregistrement lisible par ordinateur dans lequel est mis en oeuvre un programme informatique pour exécuter le procédé de la revendication 1.

6. Appareil pour reproduire des contenus, lesquels contenus comprennent :
- des données de contenus (120) comprenant plusieurs sections de données de contenus (121, 122), lesdites plusieurs sections de données de contenus étant conçues pour être reproduites séquentiellement ; et
- des informations de contenus (110) comprenant plusieurs sections d'informations de contenus (701, 702, 702, 704), chaque section d'informations de contenus (701, 702, 702, 704) contenant des informations sur les contenus d'une section de données de contenus (121, 122) correspondante, et chaque section d'informations de contenus (701, 702, 702, 704) comprenant :
- des informations de position (111) qui sont des informations sur la position de la section de données de contenus correspondante ; et
- des informations (112) indiquant si une lecture spéciale est prise en charge ;
lequel appareil comprend :
- une unité de stockage conçue pour stocker les sections de données de contenus et les sections d'informations de contenus ;
- une unité de décision de section conçue pour se référer aux informations de position et déterminer une section de données de contenus correspondant à une position où la lecture spéciale est requise ;
- une unité de détermination de lecture spéciale conçue pour se référer aux informations indiquant si la lecture spéciale est prise en charge dans la section de données de contenus déterminée, et déterminer s'il faut effectuer ou non la lecture spéciale ; et
- une unité de reproduction qui est conçue pour reproduire les contenus, et effectue la lecture spéciale sous le contrôle de l'unité de détermination de lecture spéciale ;
**caractérisé en ce que** :
- chaque section d'informations de contenus (701, 702, 702, 704) comprend en outre des informations de section de connexion (112), lesquelles informations de section de connexion (112) sont des informations indiquant qu'une section de données de contenus séquentiellement antécédente (121) devrait être reproduite avant la section de données de contenus (122) qui correspond à la section d'informations de contenus contenant les informations de section de connexion ; et
- l'appareil comprend en outre une unité de détermination de reproduction connectée qui est conçue pour déterminer si une section de données de contenus (122) est connectée à une section de données de contenus séquentiellement antécédente (121) en se référant aux informations de section de connexion ; dans lequel, si la lecture spéciale est une lecture continue ou une lecture médiane et s'il est déterminé qu'une section de données de contenus séquentiellement antécédente (121) est connectée, l'unité de détermination de reproduction connectée est conçue pour commander l'unité de reproduction de sorte que la section de données de contenus séquentiellement antécédente (121) soit reproduite avant que la section de données de contenus déterminée (122) soit reproduite.
